# FASCICULE DE BREVET EUROPEEN

(11) **EP 2 005 491 B1**
(45) Date de publication et mention de la délivrance du brevet: **29.09.2010**
(21) Numéro de dépôt: 07731708.9
(22) Date de dépôt: 08.03.2007
(51) Int. Cl.: H01L 41/04, F02D 41/20

(54) **DISPOSITIF ET PROCEDE DE PILOTAGE DE PLUSIEURS ACTIONNEURS PIEZO-ELECTRIQUES ULTRASONORES**
VORRICHTUNG UND VERFAHREN ZUM ANTRIEB VON MEHREREN ULTRASCHALL-PIEZOAKTOREN
DEVICE AND METHOD FOR DRIVING A PLURALITY OF ULTRASOUND PIEZOELECTRIC ACTUATORS

(30) Priorité: 10.04.2006 FR 0603143
(43) Date de publication de la demande: 24.12.2008
(73) Titulaire: Renault SAS, 92100 Boulogne Billancourt (FR)
(72) Inventeur: RIPOLL, Christophe, F-78220 Viroflay (FR); NOUVEL, Clément, F-78480 Verneuil Sur Seine (FR)
(86) Numéro de dépôt international: PCT/FR2007/050892
(87) Numéro de publication internationale: WO 2007/116159

(56) Documents cités:
- EP-A- 1 109 304
- EP-A- 1 276 159
- US-A- 4 784 102
- US-A- 5 969 464
- THOMPSON M ET AL: "Application of the genetic algorithm and simulated annealing to LC filter tuning" IEE PROCEEDINGS: CIRCUITS DEVICES AND SYSTEMS, INSTITUTION OF ELECTRICAL ENGINEERS, STENVENAGE, GB, vol. 148, no. 4, 6 août 2001 (2001-08-06), pages 177-182, XP006017011 ISSN: 1350-2409

## Description

La présente, invention concerne un dispositif de pilotage de plusieurs actionneurs piézo-électriques ultrasonores pilotes électroniquement tel que défini par la revendication 1, par exemple un injecteur de carburant à étage piézo-électrique piloté par le calculateur d'injection électronique d'un moteur à combustion interne dans un véhicule automobile. Elle concerne de plus un procédé de pilotage de tels actionneurs commandés par ledit dispositif.

Plus précisément, le problème que vise à résoudre l'invention est l'adaptation d'impédance pour optimiser la commande des cellules piézo-électriques destinées à faire vibrer la structure des injecteurs ultrasonores, telle que décrite dans la demande de brevet français, déposée sous le numéro 99 14548 au nom de la Demanderesse numéro de publication FR 2 801 546.

Un tel injecteur ultrasonore comporte entre autres une buse cylindrique alimentée en carburant et à l'extrémité de laquelle est ménagé un orifice d'injection, et des moyens de mise en vibration cyclique de la buse, tel un transducteur, comportant un étage en céramique piézo-électrique aux bornes de laquelle on fait varier la tension électrique pour modifier son épaisseur entre deux positions extrêmes correspondant à l'ouverture et à la fermeture de l'injecteur, à un rapport de démultiplication près. Une céramique piézo-électrique d'injecteur est équivalente au premier ordre à une capacité dont la tension de chargement est élevée, supérieure à une centaine de volts.

Ce type d'injecteur pulvérise très finement le carburant en gouttelettes, calibrées pour assurer un dosage précis, et suffisamment petites pour assurer la vaporisation complète et homogène du carburant injecté. Pour pulvériser plus finement le carburant, une ouverture oscillante à fréquence ultrasonore est réalisée au nez de la buse. Un signal alternatif de fréquence élevée doit être généré pour exciter les cellules piézo-électriques.

L'électronique de pilotage des injecteurs génère une haute tension périodique Vₚᵢ, supérieure à une centaine de volts, et à haute fréquence Fₚᵢ, supérieure à une dizaine de kHz, sur une cellule piézo-électrique à partir d'une source de tension continue, en l'occurrence la batterie du véhicule ou la sortie d'un convertisseur DC de puissance. Dans un véhicule automobile, la tension d'alimentation a pour valeur 12 ou 42 volts, ce qui implique d'augmenter cette tension pour assurer la charge et la décharge de la céramique.

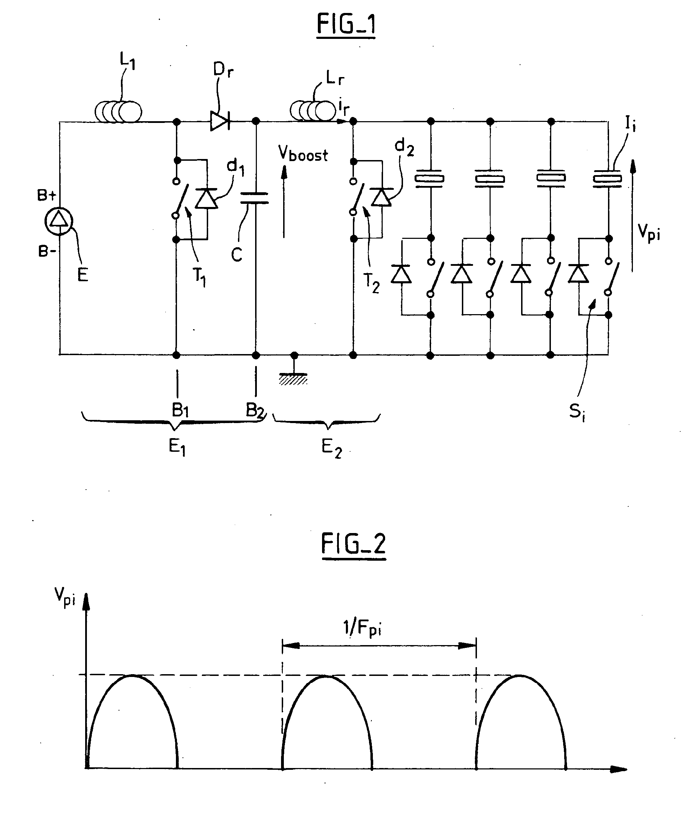

Il existe actuellement des dispositifs de pilotage sans transformateur, tel que celui représenté sur la figure 1, qui est alimenté par une source de tension continue E, la batterie du véhicule par exemple, dont la borne B- est reliée à la masse et la borne B+ est reliée à un premier étage E₁ d'amplification de ladite tension continue.

Les N injecteurs Iᵢ d'un moteur thermique, N étant un entier généralement à 4, 6 ou 12, sont montés en parallèle et commandés séquentiellement grâce à des interrupteurs Sᵢ de sélection, montés chacun en série avec un injecteur Iᵢ. Un calculateur électronique d'injection envoie un signal logique de commande à chaque interrupteur de sélection pour que la sortie haute tension du convertisseur-élévateur de tension soit bien appliquée aux bornes de l'injecteur sélectionné.

Le dispositif de pilotage comporte une première branche B₁ constituée d'une première inductance L₁ et d'un interrupteur de découpage Tₗ aux bornes duquel est montée en anti-parallèle une diode d₁ de roue libre. Une première borne de l'inductance L₁ est reliée à la source de tension continue E et l'autre borne est reliée à une seconde branche B₂ constituée d'une diode D de redressement en série avec une capacité C de filtrage, aux bornes de laquelle est délivrée une haute tension V_{boost} alimentant un second étage E₂ du convertisseur-élévateur.

Le second étage comprend une deuxième inductance Lᵣ reliée à un deuxième interrupteur de découpage T₂ et à une deuxième diode d₂ de roue libre montée en anti-parallèle.

Le convertisseur-élévateur de tension génère une haute tension périodique Vₚᵢ, supérieure à une centaine de volts, avec une haute fréquence Fₚᵢ, supérieure à une dizaine de kHz, destinée à exciter les injecteurs Iᵢ ultrasonores. Une représentation temporelle de la tension d'excitation Vₚᵢ des injecteurs fait l'objet de la figure 2.

La valeur de l'inductance Lᵣ étant fonction de la résonance d'excitation acoustique de l'actionneur piézo-électrique, elle est choisie pour que l'inductance se charge suffisamment pour provoquer une tension d'excitation Vₚᵢ élevée, de l'ordre de 1200 V. Quant à la capacité C de filtrage, ses dimensions sont telles qu'elle a une réactivité très forte à la montée en tension V_{boost}.

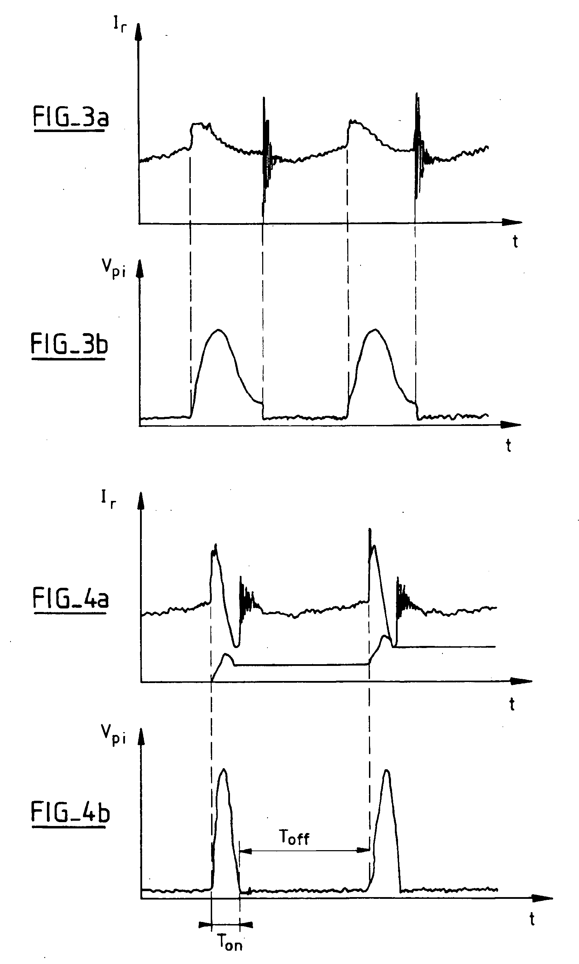

La figure 2 est une représentation de cette résonance libre entre l'inductance Lᵣ et la capacité d'entrée des injecteurs sélectionnés dans le cas où elle est théorique. Mais en réalité, elle est amortie par la nature réelle de l'injecteur piézo-électrique, ce qui conduit à un amortissement de la tension Vₚᵢ observable comme le montre la figure 3_{b}, qui est une représentation temporelle. On constate en effet un niveau de tension non nul au moment de la fermeture de l'interrupteur T₂, ce qui se traduit par des oscillations importantes sur le courant à ses bornes, à cet instant. Ce niveau de tension non nul est lié au caractère amorti de la résonance entre la charge et l'inductance Lᵣ. On notera également que le courant Iᵣ circulant dans l'injecteur est très perturbé lors de l'amortissement, comme le montre la figure 3ₐ.

Pour retrouver un niveau de tension nul au moment de la commutation de l'interrupteur T₂, ce qui est préférable pour faciliter les commutations et donc diminuer les pertes dans le transistor, on diminue la valeur de l'inductance Lᵣ de résonance, de 1 mH à 200 µH par exemple, et on réduit le temps d'ouverture de l'interrupteur T₂. Ainsi, il est possible de pallier cet amortissement de tension et cette perturbation de courant, comme le montrent les représentations temporelles des figures 4_{b} et 4ₐ.

Cependant, ce dimensionnement de l'inductance Lᵣ tenant compte de l'amortissement critique de l'ensemble inductance/injecteur entraîne une forme d'onde de pilotage des injecteurs avec un rapport cyclique Tₒₙ/T_{off}, qui est le rapport entre le temps d'ouverture et le temps de fermeture, inférieur à ½. C'est un inconvénient notable car le déplacement de la sonotrode de l'injecteur, donc les performances en débit de l'injecteur, est d'autant plus important que le rapport cyclique est égal ou supérieur à ½.

Le problème consiste donc à diminuer les pertes et les sur-oscillations dans le transistor T₂ de découpage dans le deuxième étage lors de sa commutation, tout en préservant le rapport cyclique garant des performances de l'injecteur.

Actuellement, les injecteurs piézo-électriques ne fonctionnent pas selon un principe de résonance, mais ils présentent des phénomènes de résonance liés aux éléments capacitifs, tels le stack, ou selfiques, comme les fils de liaison entre autres, qui ne sont pas fonctionnels. En outre ils présentent des fréquences caractéristiques bien moins élevées. Dans la demande de brevet DE 199 31 235, au nom de SIEMENS, l'invention décrite propose de commuter des charges capacitives pour améliorer le fonctionnement d'une charge en transitoire. Il s'agit de changer l'allure des fronts de montée ou de descente de certains signaux. Cependant, l'objectif de cette invention n'est pas de réaliser une adaptation d'impédance pour commander un actionneur à sa fréquence de résonance.

Un dispositif de pilotage comprenant des capacités parallèles aux actionneurs est divulgué par US 5 969 464. Des dispositifs de pilotage pour des injecteurs sont divulgués par US 4 784 102 et EP 1 276 159 A1.

Le but de l'invention est de pallier cet inconvénient, en ajoutant une charge capacitive aux bornes de chaque injecteur pendant son pilotage pour améliorer l'évolution des signaux de résonance au profit du transistor de découpage du deuxième étage du dispositif, en diminuant ses pertes thermiques et son stress, et au profit du résonateur, en augmentant ses performances. Elle permet de plus de se rapprocher du rapport cyclique idéal, égal à ½, sans amortissement critique.

Pour cela, un premier objet de l'invention est un dispositif de pilotage tel que défini par la revendication 1.

Un second objet de l'invention est un procédé de pilotage de plusieurs actionneurs piézo-électriques ultrasonores tel que défini par la revendication 2.

D'autres caractéristiques et avantages de l'invention apparaîtront à la lecture de la description, illustrée par les figures suivantes qui sont, outre les figures 1, 2, 3ₐ et 3_{b}, 4ₐ et 4_{b} déjà décrites :
- la figure 5 : le schéma électronique d'un exemple de réalisation d'un dispositif de pilotage d'un actionneur piézo-électrique ultrasonore selon l'invention ;
- les figures 6a à 6d : la représentation temporelle des signaux de commande de l'injection et de la tension d'excitation des actionneurs.

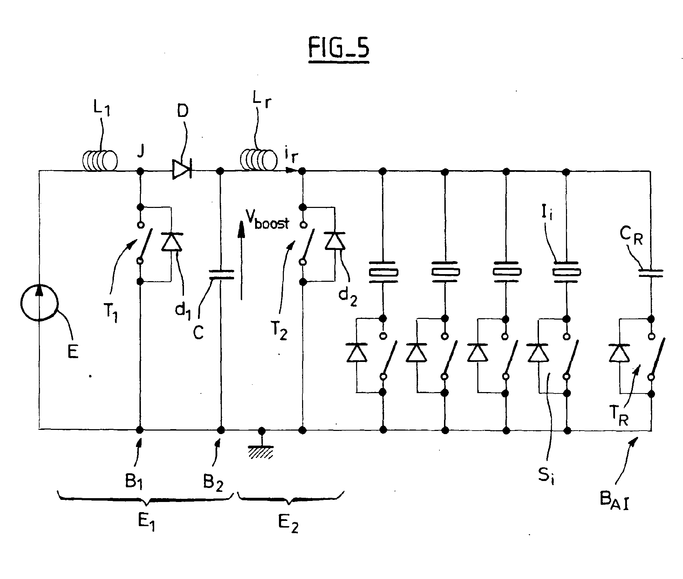

Le schéma de la figure 5 reprend le montage du dispositif de la figure 1, c'est-à-dire qu'une source de tension E alimente un premier étage d'amplification E₁ de cette tension, dans le but de générer une haute tension V_{boost} aux bornes d'un second étage E₂ de génération d'une source de courant iᵣ destiné à alimenter les injecteurs piézo-électriques Iᵢ. Ces injecteurs montés en parallèle sont sélectionnés par des interrupteurs Sᵢ commandables par le calculateur d'injection du véhicule.

Le premier étage de génération d'une haute tension V_{boost} comprend deux branches, la première B₁, constituée d'une inductance L₁ et d'un interrupteur de découpage T₁ en parallèle avec une diode d₁ montée en anti-parallèle.

Entre la masse et le point de jonction J de l'inductance L₁ avec l'interrupteur T₁, est montée la deuxième branche B₂ constituée d'une diode D de redressement en série avec une capacité C de filtrage aux bornes de laquelle est délivrée une haute tension V_{boost} alimentant le deuxième étage E₂. Ce dernier est constitué d'une seconde inductance Lᵣ et d'un second interrupteur T₂ de découpage. Une seconde diode d₂ de roue libre est montée en anti-parallèle aux bornes de cet interrupteur T₂.

La caractéristique essentielle de l'invention consiste à ajouter, montée en parallèle à l'interrupteur T₂ de découpage, une branche d'adaptation d'impédance B_{AI}, constituée d'une capacité réactive C_{R}, associée à un interrupteur de sélection T_{R} qui est piloté à l'ouverture et la fermeture en même temps que l'interrupteur de sélection Sᵢ de l'injecteur choisi par le calculateur d'injection. Cette branche additionnelle constituée d'une capacité C_{R} et d'un interrupteur T_{R} est montée aux bornes des branches de sélection des injecteurs pour aider à leur pilotage en tension. D'autres topologies des deux premiers étages du dispositif de commande sont applicables à l'invention.

La capacité réactive C_{R} est dimensionnée pour augmenter la capacité de l'ensemble injecteur/capacité réactive devant résonner avec l'inductance Lᵣ de l'étage d'amplification et fournir une tension d'excitation Vₚᵢ alternative des injecteurs de rapport cyclique pouvant atteindre la valeur ½.

L'invention propose un procédé de commande de l'interrupteur T_{R} de cette branche additionnelle permettant de bénéficier de la charge capacitive pendant le train d'impulsions provoquant l'injection, en s'affranchissant des décharges brutales en début de train. Pour cela, l'ouverture de l'interrupteur T_{R} est commandée après la commande de fin d'injection, l'interrupteur T₂ de découpage du deuxième étage du dispositif de pilotage des injecteurs restant ouvert, après un intervalle de temps d_{O} déterminé à partir de l'annulation de la tension V_{R} aux bornes de la capacité C_{R} d'adaptation et de la tension Vₚᵢ aux bornes de l'injecteur sélectionné afin que celles-ci n'aient pas le temps de remonter significativement, et la fermeture de l'interrupteur T_{R} est retardée d'un intervalle de temps d_{F} par rapport à la fermeture de l'interrupteur T₂ pour que ces mêmes tensions V_{R} et Vₚᵢ soient quasi nulles en début d'injection. La capacité réactive d'adaptation C_{R} conserve ainsi une charge quasi nulle entre deux trains d'injections de durée Dₜ et le problème de sa décharge violente est évité.

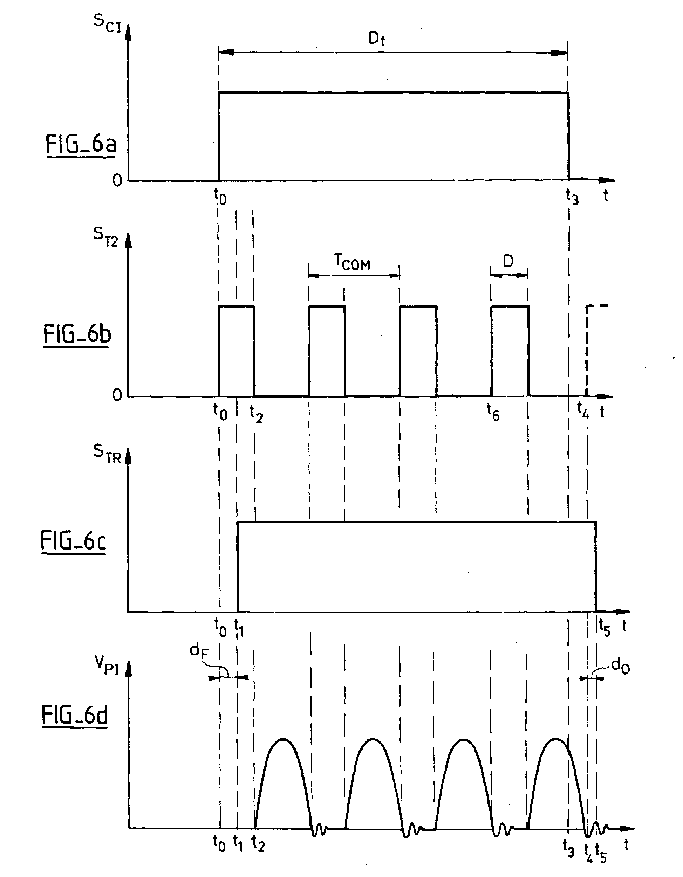

La figure 6a représente le signal S_{CI} de commande de l'injection de durée Dₜ, commençant à l'instant t0 et se terminant à l'instant t3 et la figure 6b représente le signal S_{T2} de commande du deuxième étage du dispositif de pilotage, débutant à l'instant t0 et composé de plusieurs créneaux de durée D et de période T_{com}, la fin d'injection devant être commandée pendant un créneau d'ouverture de l'interrupteur T₂, c'est-à-dire quand la tension Vₚᵢ aux bornes de l'injecteur sélectionné est positive.

La figure 6c représente le signal S_{TR} de commande de l'interrupteur de sélection Sᵢ d'un injecteur et de l'interrupteur T_{R} associé à la capacité d'adaptation C_{R}, et les tensions Vₚᵢ aux bornes de l'injecteur sélectionné et V_{R} aux bornes de la capacité d'adaptation sont représentées sur la figure 6d. La tension Vₚᵢ aux bornes de l'injecteur sélectionné est nulle ou très inférieure à la tension d'excitation V_{boost}, de l'ordre de 1/10 de celle-ci, à partir de l'instant t4 après la commande de fin d'injection.

Le signal S_{TR} de commande de l'interrupteur de sélection Sᵢ d'un injecteur et de l'interrupteur T_{R} de la branche d'adaptation débute à l'instant t1 différent de l'instant t0 de commande de début d'injection dont il est séparé par un intervalle de temps d_{F}, et leur ouverture est commandée à l'instant t5 postérieur à l'instant t4 d'annulation de la tension Vₚᵢ aux bornes de l'injecteur sélectionné, qui aurait donné lieu à une nouvelle commande d'injection. Ces deux instants t4 et t5 sont séparés par un intervalle de temps d_{O}, qui doit être inférieur à 1/10 de la période de commande T_{corn} appliquée sur l'interrupteur T₂ de découpage du deuxième étage du dispositif de pilotage des injecteurs.

La commande de fin d'injection ne peut intervenir, à l'instant t3, que pendant une phase d'ouverture de l'interrupteur T₂ du deuxième étage du dispositif de pilotage, ainsi l'interrupteur de sélection Sᵢ d'un injecteur et l'interrupteur T_{R} associé à la capacité d'adaptation C_{R} sont activés à l'ouverture à l'instant t5, postérieur aux instants t3 et t4, et antérieur à une nouvelle commande d'injection, pendant que l'interrupteur T₂ n'est plus activé.

Concernant l'instant t1 de fermeture de l'interrupteur T_{R} d'adaptation, il doit avoir lieu d'une part après l'instant t0 de fermeture de l'interrupteur T₂ du deuxième étage du dispositif de pilotage, car selon sa technologie il n'est pas réellement fermé à l'instant t0 donc le début de l'injection est un peu retardé, et d'autre part avant l'instant t2 de son ouverture, de sorte que l'intervalle de temps d_{F} entre les instants t0 et t1 dépend de la technologie de l'interrupteur T₂.

Selon l'invention, la tension Vₚᵢ aux bornes de l'injecteur sélectionné et la tension V_{R} aux bornes de la capacité d'adaptation, représentées sur la figure 6d, sont nulles ou très inférieures à la tension d'excitation V_{boost}, de l'ordre de 1/10 de celle-ci, d'une part à partir de l'instant t4, après la commande de fin d'injection, et d'autre part avant l'instant t2 de fermeture de l'interrupteur T_{R}. L'énergie emmagasinée dans la capacité de l'injecteur piézo-électrique sélectionné et dans la capacité d'adaptation est déchargée lors de la fermeture de l'interrupteur de sélection Sᵢ et de l'interrupteur T_{R} en début d'injection, ainsi que lors de leur ouverture à l'instant t5, en fin d'injection.

La durée de vie des composants est préservée et la dissipation thermique correspondant aux commutations des interrupteurs est minimisée alors que le rapport cyclique de commande reste aussi proche que possible de ½ pour conserver de bonnes performances d'injection.

## Revendications

1. Dispositif de pilotage de plusieurs actionneurs piézo-électriques ultrasonores (Ii), ce dispositif comprenant un calculateur de contrôle conçu pour piloter électroniquement les actionneurs, une alimentation électrique comprenant une source de tension continue et propre à alimenter les actionneurs, des moyens de sélection (Si) respectivement associés aux actionneurs et sélectivement commandés par le calculateur, et une branche d'adaptation d'impédance montée en parallèle des actionneurs et comprenant une capacité réactive (CR) et un interrupteur d'adaptation (TR), cet interrupteur d'adaptation (TR) étant monté en série avec la capacité réactive (CR), et le calculateur de contrôle étant conçu pour piloter de façon synchronisée, à la fermeture et à l'ouverture, l'interrupteur d'adaptation (TR) et les moyens de sélection (Si) de chaque actionneur à exciter, **caractérisé en ce que** l'alimentation électrique comprend un premier étage (E1) d'amplification de tension à découpage, alimenté par ladite tension continue et délivrant une haute tension (V_{boost}), et un deuxième étage (E2) alimenté par la haute tension (V_{boost}), délivrant une tension d'excitation alternative (Vpi), et comprenant une inductance (Lr) et un interrupteur haute tension (T2), et **en ce que** l'ensemble constitué par chaque actionneur et la capacité réactive (CR) est dimensionné pour entrer en résonance avec l'inductance (Lr) de l'alimentation électrique et fournir ladite tension d'excitation alternative (Vpi) avec un rapport cyclique au moins égal à 1/2.

2. Procédé de pilotage de plusieurs actionneurs par un dispositif selon la revendication 1, **caractérisé en ce qu'**il comprend, pour l'activation de chaque actionneur, les opérations consistant à :
- déclencher une commande d'activation de durée (Dt) suffisante pour permettre l'apparition d'au moins une première et d'une partie au moins d'une dernière alternance positive de la tension d'excitation alternative (Vpi);
- commander l'interrupteur haute tension (T2) à l'ouverture pendant chaque alternance positive de la tension d'excitation alternative (Vpi), et à la fermeture en dehors de ces alternances;
- commander la fermeture de l'interrupteur d'adaptation (TR) pendant une durée dépendant de la durée de la commande d'activation;
- interrompre la commande d'activation à un instant (t3) antérieur à un instant (t4) de disparition de la dernière alternance positive de la tension d'excitation alternative (Vpi); et
- commander l'ouverture de l'interrupteur d'adaptation (TR) à un instant (t5) postérieur à l'instant (t4) de disparition de la dernière alternance positive de la tension d'excitation alternative (Vpi), ledit instant postérieur (t5) étant séparé dudit instant (t4) de disparition par un intervalle de temps (do) défini pour que la tension (VR) aux bornes de la capacité réactive (CR) et la tension d'excitation (Vpi) soient nulles ou au plus égales au 1/10^{ème} de ladite haute tension (V_{boost}).

3. Procédé de pilotage selon la revendication 2, **caractérisé en ce qu'**il comprend, pour l'excitation de chaque actionneur, les opérations consistant à :
- déclencher la commande d'activation à un instant initial (t0) de fermeture de l'interrupteur haute tension (T2); et
- déclencher la fermeture de l'interrupteur d'adaptation (TR) à un instant (t1) intermédiaire entre l'instant initial (t0) et l'instant (t2) d'apparition de la première alternance positive de la tension d'excitation alternative (Vpi), ledit instant intermédiaire (t1) étant séparé dudit instant initial (t0) par un intervalle de temps (dF) défini pour que la tension (VR) aux bornes de la capacité réactive (CR) et la tension d'excitation (Vpi) soient nulles ou au plus égales au 1/10^{éme} de ladite haute tension (V_{boost}).

4. Procédé de pilotage selon l'une quelconque des revendications 2 et 3, **caractérisé en ce que** l'intervalle de temps (do) entre ledit instant (t4) de disparition et ledit instant postérieur (t5) est inférieur à 1/10 de la période de commande (Tcom) appliquée à l'interrupteur haute tension (T2).

5. Procédé de pilotage selon l'une quelconque des revendications 2 à 4, **caractérisé en ce qu'**il s'applique au pilotage des injecteurs de carburant à étage piézo-électrique pilotés par le calculateur d'injection électronique d'un moteur à combustion interne dans un véhicule automobile.

## Claims

1. Device for driving a plurality of ultrasound piezoelectric actuators (Ii), this device comprising a control computer designed to electronically drive the actuators, an electrical power supply comprising a DC voltage source and specifically for powering the actuators, selection means (Si) respectively associated with the actuators and selectively controlled by the computer, and an impedance matching branch mounted in parallel with the actuators and comprising a reactive capacitor (CR) and a matching switch (TR), this matching switch (TR) being mounted in series with the reactive capacitor (CR), and the control computer being designed to drive synchronously, upon closing and opening, the matching switch (TR) and the selection means (Si) of each actuator to be excited, **characterized in that** the electrical power supply comprises a first switch mode voltage boosting stage (E1), powered by said DC voltage and delivering a high voltage (V_{boost}), and a second stage (E2) powered by the high voltage (V_{boost}) delivering an AC excitation voltage (Vpi), and comprising an inductance (Lr) and a high voltage switch (T2), and **in that** the assembly comprising each actuator and the reactive capacitor (CR) is engineered to resonate with the inductance (Lr) of the electrical power supply and to supply said AC excitation voltage (Vpi) with a duty cycle at least equal to 1/2.

2. Method for driving a plurality of actuators by a device according to Claim 1, **characterized in that** it comprises, for the activation of each actuator, the operations consisting in:
- triggering an activation command of a duration (Dt) that is sufficient to allow for the appearance of at least one first and at least a portion of a last positive alternation of the AC excitation voltage (Vpi) ;
- opening the high voltage switch (T2) during each positive alternation of the AC excitation voltage (Vpi), and closing it outside these alternations;
- closing the matching switch (TR) for a duration dependent on the duration of the activation command;
- stopping the activation command at an instant (t3) prior to an instant (t4) of disappearance of the last positive alternation of the AC excitation voltage (Vpi); and
- opening the matching switch (TR) at an instant (t5) following the instant (t4) of disappearance of the last positive alternation of the AC excitation voltage (Vpi), said following instant (t5) being separated from said disappearance instant (t4) by a time interval (do) defined so that the voltage (VR) at the terminals of the reactive capacitor (CR) and the excitation voltage (Vpi) are zero or at most equal to 1/10th of said high voltage (V_{boost}).

3. Driving method according to Claim 2, **characterized in that** it comprises, for the excitation of each actuator, the operations consisting in:
- triggering the activation command at an initial instant (t0) of closure of the high voltage switch (T2); and
- triggering the closure of the matching switch (TR) at an intermediate instant (t1) between the initial instant (t0) and the instant (t2) of appearance of the first positive alternation of the AC excitation voltage (Vpi), said intermediate instant (t1) being separated from said initial instant (t0) by a time interval (dF) defined so that the voltage (VR) at the terminals of the reactive capacitor (CR) and the excitation voltage (Vpi) are zero or at most equal to 1/10th of said high voltage (V_{boost}).

4. Driving method according to any one of Claims 2 and 3, **characterized in that** the time interval (do) between said disappearance instant (t4) and said following instant (t5) is less than 1/10 of the command period (Tcom) applied to the high voltage switch (T2).

5. Driving method according to any one of Claims 2 to 4, **characterized in that** it is applied to the driving of fuel injectors with a piezoelectric stage driven by the electronic injection computer of an internal combustion engine in a motor vehicle.

## Patentansprüche

1. Vorrichtung zur Steuerung mehrerer piezoelektrischer Ultraschallaktoren (Ii), wobei diese Vorrichtung einen Kontrollrechner, der konzipiert ist, um die Aktoren elektronisch zu steuern, eine Stromversorgung, die eine Gleichstromquelle enthält und die Aktoren versorgen kann, Auswahleinrichtungen (Si), die je den Aktoren zugeordnet sind und wahlweise vom Rechner gesteuert werden, und einen Impedanzanpassungszweig enthält, der mit dem Aktoren parallelgeschaltet ist und einen reaktiven Kondensator (CR) und einen Anpassungsschalter (TR) enthält, wobei dieser Anpassungsschalter (TR) mit dem reaktiven Kondensator (CR) in Reihe geschaltet und der Kontrollrechner konzipiert ist, um den Anpassungsschalter (TR) und die Auswahleinrichtungen (Si) jedes zu erregenden Aktors in Öffnungsrichtung und in Schließrichtung synchron zu steuern, **dadurch gekennzeichnet, dass** die Stromversorgung eine erste getaktete Spannungsverstärkungsstufe (E1), die mit der Gleichspannung versorgt wird und eine Hochspannung (V_{boost}) liefert, und eine zweite Stufe (E2) enthält, die mit der Hochspannung (V_{boost}) versorgt wird, eine Erregerwechselspannung (Vpi) liefert und eine Drosselspule (Lr) und einen Hochspannungsschalter (T2) enthält, und dass die aus jedem Aktor und dem reaktiven Kondensator (CR) bestehende Einheit bemessen ist, um mit der Drosselspule (Lr) der Stromversorgung in Resonanz zu kommen und die Erregerwechselspannung (Vpi) mit einem zyklischen Verhältnis mindestens gleich 1/2 zu liefern.

2. Verfahren zur Steuerung mehrerer Aktoren durch eine Vorrichtung nach Anspruch 1, **dadurch gekennzeichnet, dass** es zur Aktivierung jedes Aktors die Vorgänge enthält, die darin bestehen:
- eine Aktivierungssteuerung einer ausreichenden Dauer (Dt) auszulösen, um das Auftreten mindestens einer ersten und mindestens eines Teils einer letzten positiven Halbperiode der Erregerwechselspannung (Vpi) zu erlauben;
- das Öffnen des Hochspannungsschalters (T2) während jeder positiven Halbperiode der Erregerwechselspannung (Vpi) und das Schließen außerhalb dieser Halbperioden zu steuern;
- das Schließen des Anpassungsschalters (TR) während einer Dauer zu steuern, die von der Dauer der Aktivierungssteuerung abhängt;
- die Aktivierungssteuerung in einem Zeitpunkt (t3) vor einem Zeitpunkt (t4) des Verschwindens der letzten positiven Halbperiode der Erregerwechselspannung (Vpi) zu unterbrechen; und
- das Öffnen des Anpassungsschalters (TR) in einem Zeitpunkt (t5) nach dem Zeitpunkt (t4) des Verschwindens der letzten positiven Halbperiode der Erregerwechselspannung (Vpi) zu steuern, wobei der spätere Zeitpunkt (t5) vom Zeitpunkt (t4) des Verschwindens durch ein Zeitintervall (do) getrennt ist, das so definiert ist, dass die Spannung (VR) an den Klemmen des reaktiven Kondensators (CR) und die Erregerspannung (Vpi) null oder höchstens gleich einem 1/10 der Hochspannung (V_{boost}) sind.

3. Steuerverfahren nach Anspruch 2, **dadurch gekennzeichnet, dass** es zur Erregung jedes Aktors die Vorgänge enthält, die darin bestehen:
- die Aktivierungssteuerung in einem Anfangszeitpunkt (t0) des Schließens des Hochspannungsschalters (T2) auszulösen; und
- das Schließen des Anpassungsschalters (TR) in einem Zwischenzeitpunkt (t1) zwischen dem Anfangszeitpunkt (t0) und dem Zeitpunkt (t2) des Auftretens der ersten positiven Halbperiode der Erregerwechselspannung (Vpi) auszulösen, wobei der Zwischenzeitpunkt (t1) vom Anfangszeitpunkt (t0) durch ein Zeitintervall (dF) getrennt ist, das so definiert ist, dass die Spannung (VR) an den Klemmen des reaktiven Kondensators (CR) und die Erregerspannung (Vpi) null oder höchstens gleich 1/10 der Hochspannung (V_{boost}) sind.

4. Steuerverfahren nach einem der Ansprüche 2 und 3, **dadurch gekennzeichnet, dass** das Zeitintervall (do) zwischen dem Zeitpunkt (t4) des Verschwindens und dem späteren Zeitpunkt (t5) geringer als 1/10 der Steuerperiode (Tcom) ist, die an den Hochspannungsschalter (T2) angewendet wird.

5. Steuerverfahren nach einem der Ansprüche 2 bis 4, **dadurch gekennzeichnet, dass** es die Steuerung der Kraftstoffeinspritzdüsen mit piezoelektrischer Stufe betrifft, die vom elektronischen Einspritzrechner eines Verbrennungsmotors in einem Kraftfahrzeug gesteuert werden.
